# EUROPEAN PATENT APPLICATION

(11) **EP 3 246 237 A1**
(43) Date of publication of application: **22.11.2017**
(21) Application number: 16737546.8
(22) Date of filing: 13.01.2016
(51) Int. Cl.: B62K 21/00, B62K 21/26

(54) **FUNCTIONAL BICYCLE HANDLEBAR**

(30) Priority: 16.01.2015 KR 20150007783
(71) Applicant: Gahng, Heo Ung, Daegu 42706 (KR)
(72) Inventor: Gahng, Heo Ung, Daegu 42706 (KR)
(74) Representative: BRP Renaud & Partner mbB Rechtsanwälte Patentanwälte Steuerberater
(86) International application number: PCT/KR2016/000345
(87) International publication number: WO 2016/114582

(57) **Abstract**

The title of the present invention is a functional bicycle handlebar, and the technical field to which the present invention belongs is a bicycle handlebar, which can be pushed down forwards/backwards or pulled up to the original position, the height of which can be adjusted upwards/downwards, and which can be bent downwards. The problem to be resolved by the present invention is to eliminate the following drawbacks of an existing bicycle handlebar: the same is fixed in a predetermined position and at a predetermined height and thus cannot be varied according to the user's physical condition or the running condition, for example, thereby inconveniencing loading, movement, and parking. Technical means for resolving the above problem comprise the following three major functions: 1) a function for enabling the bicycle handlebar to be moved through sliding forwards/backwards; 2) a function for enabling the bicycle handlebar to be lifted or lowered upwards/downwards; and 3) a function for enabling handles on both sides of the handlebar to be folded downwards (towards the ground) at various angles. The present invention has the following advantages: the handlebar position can be adjusted according to the user's physical condition; the posture can be lowered or made upright during running so as to reduce physical stress, to lower the center of gravity, and to decrease the resistance of wind, thereby enabling more safe, fast running; it is possible to easily deal with rough roads, topographical changes, direction changes, unexpected situations, etc.; and inconveniences in loading and parking of the bicycle can be removed.

## Description

### [Technical Field]

The present invention relates to a bicycle handlebar having various functions, and more particularly, to a functional bicycle handlebar which may be changed in position and height during riding, allow handles to be folded at a desired angle so as to enable a user to lower his/her posture or to ride upright and thus to make the user to have a riding posture in consideration of riding situations and riding purposes, assist the user in more safely and rapidly riding a bicycle, and reduce pain and stress applied to various parts of the user's body.

Further, the present invention relates to three major functions which may save a space occupied by a bicycle handlebar when a bicycle is loaded or parked and prevent the bicycle handlebar from being entangled with other bicycle handlebars and being damaged.

### [Background Art]

Existing general bicycles are produced and sold under the condition that the bicycles have uniform specifications regardless of physical differences (arm lengths, upper and lower part lengths, etc.) among bicycle users, bicycle handlebars determining a user's riding position are also fixed to a predetermined position at a predetermined height, and, thus, bicycle users have no choice but to maintain the same position under the condition that they cannot consider riding postures suitable for their physical conditions. Therefore, users may suffer from well-known chronic physical stresses (wrist pain, palm numbness, stiffening of the back of the neck, tension of back muscles, thigh pain and waist pain) generated due to bicycle riding

Further, the functions of a bicycle and a riding posture of a user cannot be adjusted according to various riding purposes (cross-country riding, speed riding, mountain biking, road riding, etc.) and environments (rough road, an uphill road, a downhill road, a slippery road, a steep slope, etc.), and the user lurches in unexpected situations due to a high center of gravity of the upper body of the user, located above the vertical central point of the bicycle, easily loses his/her balance, falls and is thus injured.

Moreover, when a bicycle is loaded and moved, the bicycle may become entangled with other bicycles due to handlebars thereof and there may be an insufficient loading space and a probability of breakage of the bicycle, when the bicycle is parked, inconvenience and risk of breakage of the bicycle may be caused due to a narrow side space caused by the bicycle handlebars thereof, and, when the bicycle passes through a narrow path, there may be risk of damage to the user's hands and the bicycle.

### [Disclosure]

### [Technical Problem]

Therefore, the present invention has been made in view of the above problems, and it is an object of the present invention to provide a functional bicycle handlebar which may reduce stress of various regions of a user's body, caused by the fixed riding posture of the user due to a conventional bicycle handlebar, cope with a dangerous situation, and be safely and conveniently parked, loaded and moved.

For this purpose, three major functions, i.e., a sliding function of pushing down the bicycle handlebar forwards or pulling up the bicycle handlebar to an original position thereof, a function of adjusting the height of the bicycle handlebar upwards and downwards, and a function of folding handles, and devices which may execute these major functions are provided to a bicycle handlebar.

### [Technical Solution]

The object of the present invention can be achieved by providing three major functions and devices to execute the same, as follows:
1) a unit to push down a bicycle handlebar forwards (in the forward direction) so as to lower the upper body of a rider and to lower the center of gravity of the upper body of the rider, and then to pull up the bicycle handlebar to an original position thereof,
2) a unit to raise or lower the bicycle handlebar in the vertical direction so as to adjust the height of rider's hands grasping the handlebar and thus to stretch his/her back or to bend over, and
3) a unit to fold handles located at both sides of the handlebar downwards (towards the ground) in several angular stages so as to reduce the width of the riding posture of the rider and thus to enable the rider to easily control a bicycle and to load and park the bicycle.

### [Advantageous Effects]

The functional bicycle handlebar in accordance with the present invention enables a bicycle rider to bend over or to ride upright and, thereby, the overall center of gravity of the rider may be greatly lowered so that the rider may safely ride, wind resistance may be reduced so that the rider may ride at a higher speed, and particularly, the rider may easily cope with rough roads, topographical changes, direction changes, etc. Further, when the rider rides for a long time and rides at a low speed, the rider may stretch his/her back and erect his/her upper body and, thus, stress and fatigue of various regions of the body of the rider may be reduced.

Further, since the width of the riding posture of the rider is reduced and thus contact of the bicycle with objects located at the side of the bicycle or other riders may be prevented, and the center of gravity of the rider is easily moved left or right and thus the rider may be able to cope with rapid change of direction, the functional bicycle handlebar of the present invention enables everyone to pleasantly, safely and healthily enjoy bicycle riding regardless of differences in rider physique, riding environments, riding times, riding purposes, etc.

Moreover, inconveniences, such as entangling of the bicycle handlebar with another bicycle handlebars and occupation of a large space by the bicycle handlebar, when the bicycle is loaded and parked may be solved and, thus, damage to and breakage of bicycles may be prevented and hand injury and damage to the bicycle on a narrow road may be prevented.

### [Description of Drawings]

FIG. 1 is a perspective view illustrating a function of sliding a bicycle handlebar forwards or backwards and a device to execute the same in accordance with the present invention.
FIG. 2 is a perspective view illustrating a function of moving the bicycle handlebar upwards or downwards to adjust the height of the bicycle handlebar and a device to execute the same in accordance with the present invention.
FIG. 3 is a perspective view illustrating a function of folding handles of the bicycle handlebar downwards at various angels and a device to execute the same in accordance with the present invention.

### [Best Mode]

Reference will now be made in detail to the preferred embodiments of the present invention, examples of which are illustrated in the accompanying drawings.

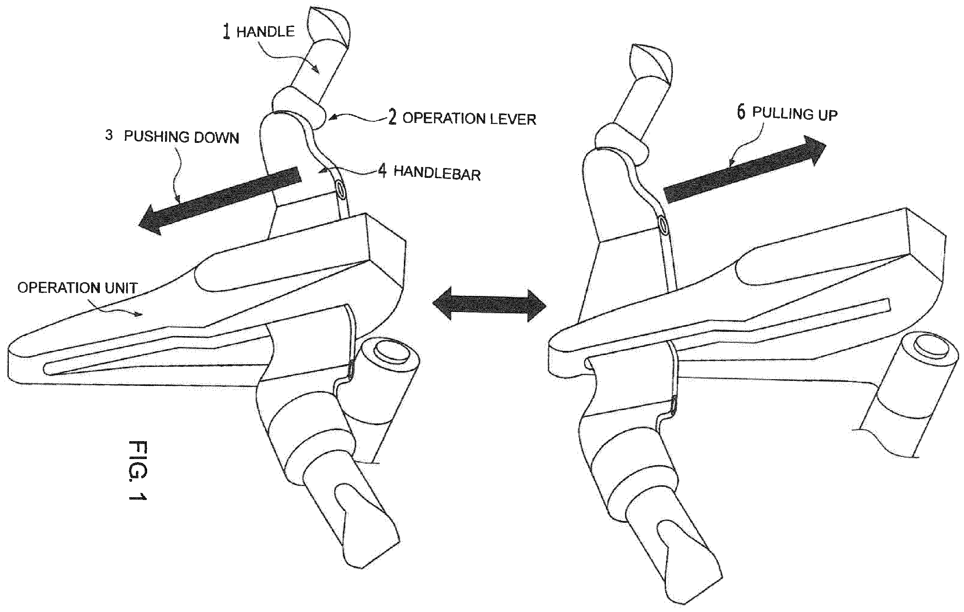

FIG. 1 is a perspective view illustrating a function of pushing a bicycle handlebar forwards or pulling the bicycle handlebar to an original position thereof, out of functions of the present invention and, here, an operation lever 2 is manipulated to slide the bicycle handlebar forwards or backwards along an operation unit 5.

The bicycle handlebar may be pushed forwards so that a rider may stretch his/her arms and upper body forwards and thus bend over forwards and downwards, and then the bicycle handlebar may be pulled up backwards to an original position thereof along the operation unit 5 by manipulation of the operation lever 2.

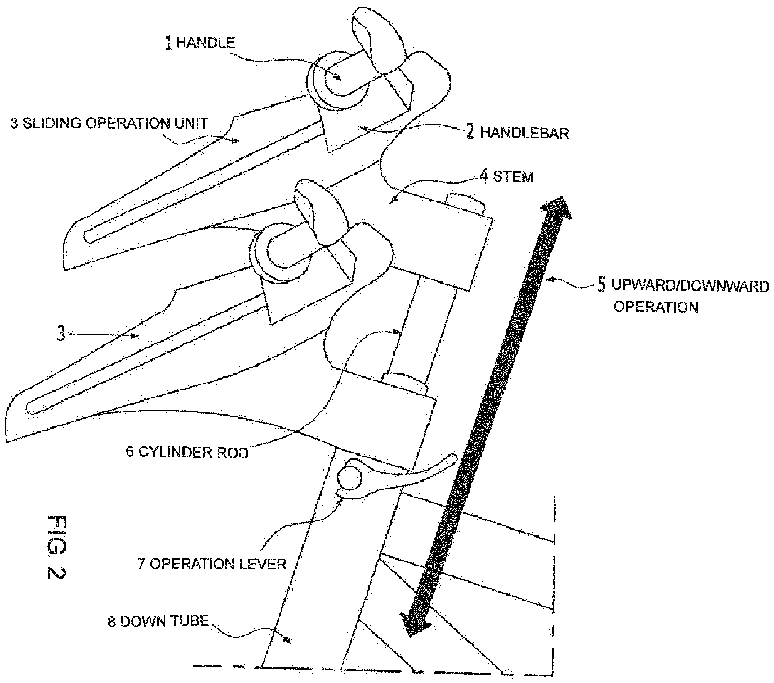

FIG. 2 is a perspective view illustrating a function of raising or lowering the bicycle handlebar upwards or downwards (in the vertical direction), out of the functions of the present invention and, here, a vertical operation lever 7 may be manipulated to randomly adjust the bicycle handlebar to a desired height in an upward/downward operation direction 5, as exemplarily shown by an arrow.

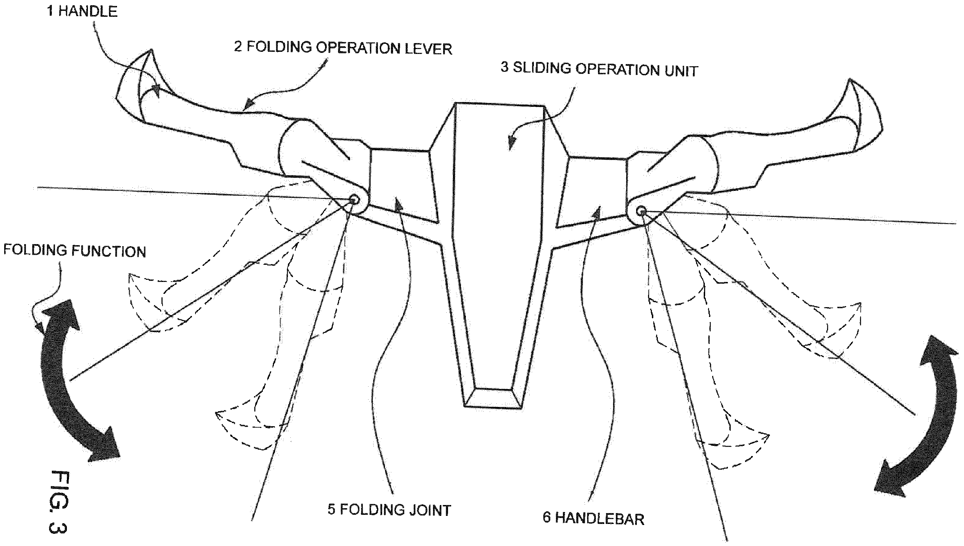

FIG. 3 is a perspective view illustrating a function of folding handles located at both sides of the bicycle handlebar downwards (towards the ground) at a desired angle, out of the functions of the present invention and, here, a folding operation lever 2 may be manipulated to fold down the handles in two or three angular stages or to fold up the handles to original positions thereof in an upward/downward folding direction 4, as exemplarily shown by arrows.

## Claims

1. A functional bicycle handlebar having a function of sliding the bicycle handlebar so as to push down or pull up the bicycle handlebar forwards or backwards, wherein:
an operation lever (2) of FIG. 1 is manipulated to push down the bicycle handlebar (4) forwards or to pull up the bicycle handlebar (4) to an original position thereof along an operation unit (5); and
the bicycle handlebar is cable of being fixed at any region of the operation unit (5) and the function is executable during riding of a bicycle as well as in parking of the bicycle.

2. A functional bicycle handlebar having a function of raising or lowering the bicycle handlebar upwards or downwards, wherein:
an operation lever (7) of FIG. 2 is manipulated to move the bicycle handlebar connected to a cylinder rod (6) through a stem (4) upwards or downwards in an upward/downward operation direction (5) so as to adjust the height of the bicycle handlebar; and
the bicycle handlebar is capable of being fixed to a desired height at any region within an upward/downward operation range and the function is executable during riding of a bicycle as well as in parking of the bicycle.

3. A functional bicycle handlebar having a function of folding handles located at both sides of the bicycle handlebar downwards (towards the ground), wherein:
a folding operation lever (2) of FIG. 3 is manipulated to fold down the handles (1) at various angles about folding joints (5);
the left and right handles are simultaneously or separately operable, are foldable at the same angle or at different angles, and the function is executable during riding of a bicycle as well as in parking of the bicycle; and the three major functions are simultaneously executable or the respective three major functions are independently executable.
